# EUROPÄISCHE PATENTSCHRIFT

(11) **EP 2 743 539 B1**
(45) Veröffentlichungstag und Bekanntmachung des Hinweises auf die Patenterteilung: **05.07.2017**
(21) Anmeldenummer: 12008336.5
(22) Anmeldetag: 14.12.2012
(51) Int. Cl.: F16F 13/26

(54) **Umschaltbares Motorlager**
Switchable motor bearing
Palier de moteur commutable

(43) Veröffentlichungstag der Anmeldung: 18.06.2014
(73) Patentinhaber: Vibracoustic GmbH, 64293 Darmstadt (DE)
(72) Erfinder: Beckmann, Wolfgang, 64289 Darmstadt (DE); Farrenkopf, Peter, 68519 Viernheim (DE); Helly, Björn, 69514 Laudenbach (DE); Scheib, Patrick, 69502 Hemsbach (DE); Stein, Kurt, 69509 Mörlenbach (DE)
(74) Vertreter: Flügel Preissner Schober Seidel

(56) Entgegenhaltungen:
- EP-A2- 2 093 456
- DE-A1- 19 652 502
- US-A- 4 671 227
- US-A- 6 120 012
- US-A1- 2009 302 515

## Beschreibung

### Technisches Gebiet

Die vorliegende Erfindung befasst sich mit einem umschaltbaren Motorlager aus einem Traglager und einem Auflager, die durch einen elastomeren Federkörper miteinander verbunden sind und das einen Arbeitsraum und einen Ausgleichsraum hat, welche durch eine Trennwand getrennt, mit einer Flüssigkeit gefüllt und über einen Dämpfungskanal hydraulisch miteinander verbunden sind, wobei die Trennwand eine über einen Schalter verschließbare Durchbrechung aufweist, und wobei der Schalter ein in den Ausgleichsraum eingefügter durch Unterdruck gesteuerter Schalter ist.

Umschaltbare Lager dieser Art sind an sich bekannt und werden in vielfachen Ausführungen hergestellt. Dabei übernehmen einzelne Teile des Lagers ihnen zugeordnete Funktionen. Durch das Ein- oder Ausschalten bestimmter Teile werden die Eigenschaften des Lagers verändert. So dient der Dämpfungskanal für die Dämpfung niedrigfrequenter, großamplitudiger Schwingungen. Hochfrequente, kleinamplitudige Schwingungen werden von einer Membran innerhalb der Trennwand entkoppelt. Die geöffnete Durchbrechung in der Trennwand ihrerseits wirkt im Leerlaufbereich als Tilger. Hier folgt ein Überströmen der Dämpfungsflüssigkeit aus dem Arbeitsraum in den Ausgleichsraum und wieder zurück, da der Strömungswiderstand in der Durchbrechung wesentlich geringer ist, als der Strömungswiderstand im Dämpfungskanal.

### Stand der Technik

In der DE 41 41 332 C2 ist ein umschaltbares Lager dargestellt, bei dem die Durchbrechung in der Trennwand durch ein Stellglied einer Steuereinrichtung verschließbar ist. Das Stellglied hat eine stopfenartige Wulst, die mit dem Rollbalg, welcher den Ausgleichsraum abschließt, einheitlich verbunden ist. Betätigt wird das Stellglied durch eine Steuerdruckdose, welche im Auflager angeordnet ist. Eine Schubfeder hält die Stelleinrichtung in Offenstellung und durch die Beaufschlagung der Steuerdruckdose mit Unterdruck bewegt sich die Stelleinrichtung auf die Durchbrechung und verschließt dieselbe.

In der DE 103 48 964 A1 ist eine andere Möglichkeit für das Verschließen der Durchbrechung gezeigt. Dort ist ein Stellelement vorgesehen, welches durch eine Spindel mit Gewinde betätigt wird. Die Spindel erlaubt eine besonders exakt einstellbare Position des Stellelements, bezogen auf die Durchbrechung. Die Spindel ist in einem hermetisch abgedichteten Raum unterhalb des Rollbalgs des Ausgleichsraumes angebracht. In dieser Druckschrift ist die Wirkungsweise der einzelnen Elemente des umschaltbaren Hydrolagers ausführlich beschrieben.

Eine weitere Möglichkeit die Menge der Durchflussflüssigkeit durch die Durchbrechung zu steuern ist in der DE 102 06 927 B4 dargestellt. Dort wird ein Stellglied benutzt, das als hohlzylinderförmige Schiebehülse ausgebildet ist und elektromagnetisch in Axialrichtung betätigt wird. Durch eine Rückstellfeder wird das Stellglied in Schließstellung gehalten.

Aus US 2009/0302515 A1 geht ein Hydrolager mit einer Arbeitskammer und einer Ausgleichskammer hervor, die über einen Überströmkanal und einen Bypasskanal, welche beide in eine Trennwand eingebracht sind, flüssigkeitsleitend miteinander verbunden sind. Der Bypasskanal ist mittels eines schaltbaren Aktors freigebbar oder verschließbar. Der Aktor ist als einteiliges Elastomerteil ausgebildet und weist einen randseitigen Befestigungsbereich und ein Stellglied auf, die miteinander über einen flexiblen Verbindungsbereich verbunden sind. Aufgrund der Formgebung und Flexibilität des Verbindungsbereichs liegt das Stellglied mit Vorspannung an einer Prallplatte an, um so eine Öffnung zur Ausgleichskammer zu verschließen. Durch Beaufschlagung des Aktors mit einem Vakuum wird dieser gegen die Trennwand gedrückt und die Öffnung wird geöffnet, so dass die Flüssigkeit von der Arbeitskammer über den Bypasskanal und die Öffnung in den Ausgleichsraum strömen kann.

Aus US 6,120,012 A geht ein Hydrolager mit einer Arbeitskammer und einer Ausgleichskammer hervor, die über einen in die Trennwand eingebrachten Dämpfungskanal flüssigkeitsleitend miteinander verbunden sind. Der Dämpfungskanal ist mittels eines in die Trennwand eingebrachten und durch Unterdruck beaufschlagbaren Ventils freigebbar und verschließbar.

Aus DE 196 525 02 A1 geht ein Hydrolager hervor, das eine Arbeitskammer und eine Ausgleichskammer aufweist, die über eine Trennwand voneinander getrennt sind. In die Trennwand ist eine Durchbrechung eingebracht, die mittels eines durch Unterdruck beaufschlagbaren schaltbaren Stellglieds freigebbar und verschließbar ist. Das Stellglied ist über einen Stösel mit einer die Ausgleichskammer begrenzenden Gummimembran verbunden, wobei der Stösel mit einer außerhalb der Gummimembran befindlichen Druckdose in Verbindung steht.

### Darstellung der Erfindung

Ausgehend von dem geschilderten Stand der Technik liegt der Erfindung die Aufgabe zugrunde, ein umschaltbares Hydrolager zu erstellen, das einen möglichst geringen Bauraum benötigt, einen sicheren Verschluss der Durchbrechung ergibt, bei gleichzeitig geringer Zuhaltekraft, und eine möglichst freie Bewegung des Rollbalgs des Ausgleichsraums zulässt. Der Schließvorgang an der Durchbrechung soll möglichst durch einen Druckschalter erfolgen. Dabei soll der Schalter ebenfalls von geringer Baugröße sein.

Die Lösung der Aufgabenstellung erfolgt mit den Merkmalen den Anspruchs 1. Bei dem Motorlager besteht der unterdruckgesteuerte Schalter aus einer Druckdose, einer Schließfeder und einem Schließelement. Der Bauraum kann deutlich reduziert werden und die Balgverformung des Balgs am Ausgleichsraum wird vom Druckschalter nur wenig beeinflusst. Der Unterdruckraum im Druckschalter wird auf ein Minimum reduziert.

Der Druckschalter kann am Auflager oder auch an der Trennwand oder an beiden fixiert werden. Hier bestehen unterschiedliche Möglichkeiten. Auch der Anschluss der Druckluftleitung an den Innenraum der Druckdose des Schalters kann auf vielfältige Weise vorgenommen werden.

Die Druckdose hat einen steifen Boden mit einer darauf aufgesetzten konusartigen Hülle aus einem elastomeren Material mit einem Schließelement an ihrer Oberseite. Bevorzugt wird der Boden aus einem Kunststoff hergestellt. Die Befestigung der Hülle am Boden erfolgt bevorzugt durch Verklemmung. Diese wird so durchgeführt, dass der Boden und die Hülle wasserdicht miteinander verbunden sind.

Die Hülle und das Schließelement sind als ein einheitliches Teil ausgebildet. Innerhalb der Druckdose ist eine Schließfeder angeordnet, welche das Schließelement in Richtung auf die Durchbrechung drückt und dadurch die Durchbrechung verschließt. Bevorzugt wird hier eine Schraubenfeder eingesetzt. Diese Schraubenfeder wird, wie übrigens auch die Druckdose selbst, koaxial zur Achse des Lagers ausgerichtet. Am Boden und am Schließelement selbst sind Aufnahmen für die Enden der Schraubenfeder vorhanden. Das obere Ende der Schraubenfeder wird dabei mit einem Einsatz aus Kunststoff versehen, um das Schließelement vor eventuellen Beschädigungen zu schützen.

Das Schließelement hat eine die Durchbrechung überdeckende Abschlussfläche in seiner einfachsten Ausführungsform. Besonders vorteilhaft ist es jedoch, wenn das Schließelement durch einen in die Durchbrechung ragenden Stöpsel gebildet wird. Dieser Stöpsel und auch die Durchbrechung sind kegelstumpfartig ausgebildet. Bei geöffneter Durchbrechung entsteht dann zwischen der Innenwand der Durchbrechung und der Außenwand des Verschlussstöpsels eine Flüssigkeitssäule, die in ihren Querschnittsflächen gleichbleibend ist. Dabei sind zumindest die Querschnittflächen der Flüssigkeitssäule an den Durchlässen zum Arbeitsraum und zum Ausgleichsraum identisch in ihrer Flächengröße. Bevorzugt werden dabei die Kegelwinkel an der Innenwand der Durchbrechung und an der Außenwand des Verschlussstöpsels voneinander in ihrer Größe abweichen. Dabei ist der Kegelwinkel des Verschlussstöpsels größer als der Kegelwinkel der Durchbrechung. Es ist günstig, an der Durchbrechung und am Verschlussstöpsel über deren gesamte Höhe einheitliche Kegelwinkel vorzusehen.

### Kurzbeschreibung der Zeichnung

In der Zeichnung sind zwei Ausführungsbeispiele des Motorlagers dargestellt.

Es zeigt,
- Fig. 1: einen Schnitt durch das Motorlager mit einem Unterdruckschalter im Ausgleichsraum, bei dem die Durchbrechung durch ein auf seiner Oberseite eben ausgebildetes Schließelement abgeschlossen ist,
- Fig. 2: einen Schnitt durch das Motorlager bei dem das Schließelement durch einen in die Durchbrechung ragenden Stöpsel gebildet ist und
- Fig. 3: die Durchbrechung mit Stöpsel in vergrößerter Darstellung.

### Ausführung der Erfindung

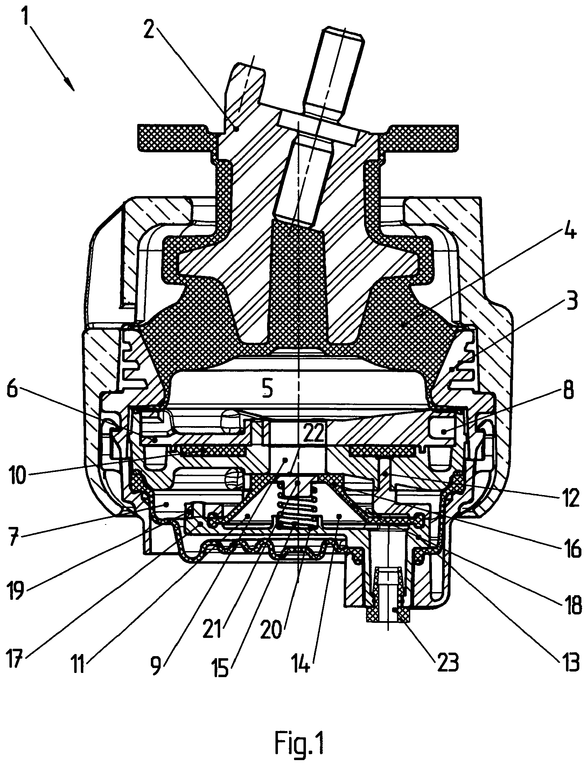

Das in der Fig. 1 dargestellte Motorlager 1 hat das Traglager 2 und das Auflager 3. Ein konusförmiger Federkörper 4 aus elastomerem Material verbindet das Traglager 2 und das Auflager 3. Unterhalb des Federkörpers 4 befindet sich der Arbeitsraum 5, der mit einer Flüssigkeit gefüllt ist. Die Trennwand 6 trennt den Arbeitsraum 5 vom Ausgleichsraum 7. In der Trennwand 6 ist außen der Dämpfungskanal 8 und mittig die Durchbrechung 9 untergebracht. Außerdem befindet sich in der Trennwand 6 eine ringförmige Membran 10 die beweglich eingesetzt ist. Im Ausgleichsraum 7 ist der Druckschalter 11 angeordnet. Der Druckschalter 11 ist im vorliegenden Beispiel am Auflager 3 und an der Trennwand 6 fixiert. Hierfür sind mehrere auf den Umfang des Druckschalters 11 vorgesehene Stifte 12 vorhanden, die an der Trennwand 6 befestigt sind. Außerdem wird der Druckschalter 11 von einer seitlichen Stütze 13 am Auflager 3 abgestützt. Der Unterdruckschalter 11 besteht aus der Druckdose 14, der Schließfeder 15 und dem Schließelement 16. Die Druckdose 14 hat den steifen Boden 17 und die darauf aufgesetzte konusartige Hülle 18 aus einem elastomeren Material. An der Hülle 18 befindet sich das Schließelement 16. Der Boden 17 ist aus einem Kunststoff hergestellt. Hülle 18 und Schließelement 16 sind ein einheitliches Teil.

Der Boden 17 und die Hülle 18 sind an ihren Rändern wasserdicht miteinander verbunden. Dieses erfolgt durch ein Verklemmen am Bodenrand über den Klemmaufsatz 19. Die Schließfeder 15 ist eine innerhalb der Druckdose angeordnete Schraubenfeder. Am Boden 17 ist die Aufnahme 20 für die Schließfeder 15 gebildet. Während das obere Ende der Schraubenfeder 15 mit dem Einsatz 21 versehen ist, der in eine Vertiefung im Schließelement 16 sich einfügt.

In diesem Beispiel hatte das Schließelement 16 eine die Durchbrechung 9 überdeckende im Wesentlichen ebene Abschlussfläche 22.

Der Innenraum der Druckdose 14 ist mit einem nicht näher gezeigten Druckgenerator verbunden. Hierfür ist an der Unterseite des Auflagers 3 der Anschluss 23 vorhanden, der über einen Kanal im Boden 17 mit dem Innenraum 14 der Druckdose 11 verbunden ist.

Im gezeigten Ausführungsbeispiel ist die Durchbrechung 9 durch das Schließelement 16 verschlossen. Die Schließfeder 15 drückt das Schließelement 16 gegen die Trennwand 6 im Bereich der Durchbrechung 9 und hält das Schließelement 16 in dieser Lage. Die Drücke der Flüssigkeit im Ausgleichsraum 7 und der Druckluft im Innenraum der Druckdose 14 sind in etwa gleich, sodass der Druck durch die Schließfeder 15 auf das Schließelement 16 sehr gering gehalten werden kann. Die Steuerung des Innendrucks im Innenraum der Druckdose 14 wird so vorgenommen, dass im Leerlauf ein Unterdruck aufgebaut wird, sodass der Gegendruck der Feder 15 überwunden wird. Durch den Unterdruck im Innenraum wird die Durchbrechung 9 geöffnet, sodass eine Schwingungstilgung im Leerlauf durch die in der Durchbrechung vorhandene Flüssigkeitssäule eintritt. Der angelegte Unterdruck kann so gesteuert werden, dass eine vollständige Öffnung der Durchbrechung 9 eintritt oder auch nur eine teilweise Öffnung.

Bei dem Ausführungsbeispiel hat die Hülle 18 an ihrem Rand eine umlaufende Wulst, um eine gute Abdichtung der Druckdose 14 gegenüber dem Druck der Flüssigkeit im Ausgleichsraum 7 zu erreichen.

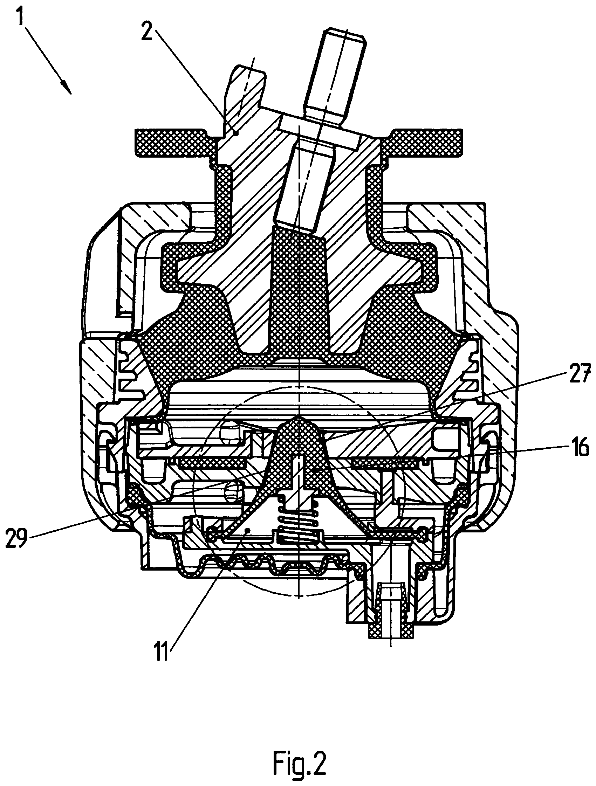

In der Fig. 2 hat das Motorlager 1 einen mit der Ausbildung nach Fig. 1 vergleichbaren Aufbau. Unterschiedlich ist jedoch die Ausbildung des Schließelements 16, welches hier durch einen in die Durchbrechung 9 ragenden Stöpsel 27 gebildet ist. Die Durchbrechung 29 und der Stöpsel 27 sind hier kegelstumpfartig ausgebildet. Der Kegelwinkel α des Verschlussstöpsels 27 ist größer als der Kegelwinkel β der Durchbrechung 29. Auf diese Weise kann bei geöffneter Durchbrechung 29 die zwischen der Innenwand der Durchbrechung 29 und der Außenwand des Verschlussstöpsels 27 vorhandene Flüssigkeitssäule in ihren Querschnittsflächen gleichbleibend in ihrer Größe gehalten werden. Diese Ausführungsform der Durchbrechung 29 und des Schließelements 16 erlaubt eine besonders günstige Regulierung der Durchflussmenge über den Unterdruckschalter 11.

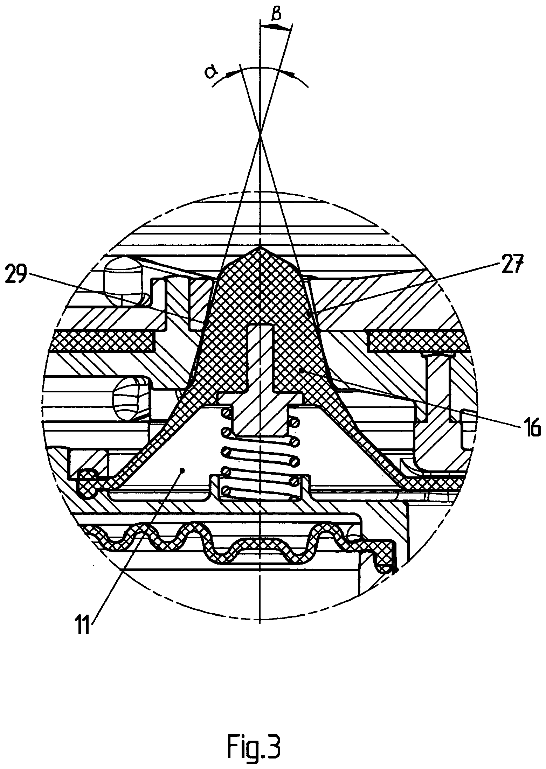

Die Fig. 3 gibt die Durchbrechung 29 mit Stöpsel 27 vergrößert wieder. Hier sind die Kegelwinkel α des Verschlussstöpsels 27 und β der Durchbrechung 29 eingezeichnet.

## Patentansprüche

1. Vorrichtung Umschaltbares Motorlager (1) aus einem Traglager (2) und einem Auflager (3), die durch einen elastomeren Federkörper (4) miteinander verbunden sind, das einen Arbeitsraum (5) und einen Ausgleichsraum (7) hat, welche durch eine Trennwand (6) getrennt mit einer Flüssigkeit gefüllt und über Dämpfungskanal (8) hydraulisch miteinander verbunden sind, wobei die Trennwand (6) eine über einen Schalter (11) verschließbare Durchbrechung (9, 29) aufweist, und wobei der Schalter (11) ein in den Ausgleichsraum (7) eingefügter durch Unterdruck gesteuerter Schalter (11) ist, **dadurch gekennzeichnet, dass** der durch Unterdruck gesteuerte Schalter (11) aus einer Druckdose (14), einer Schließfeder (15) und einem Schließelement (16) besteht.

2. Umschaltbares Motorlager nach Anspruch 1, **dadurch gekennzeichnet, dass** der durch Unterdruck gesteuerte Schalter (11) am Auflager (3) und/oder an der Trennwand (6) fixiert ist.

3. Umschaltbares Motorlager nach Anspruch 1 oder 2, **dadurch gekennzeichnet, dass** der Schalter (11) eine Druckdose hat, deren Innenraum an einen Druckgenerator angeschlossen ist.

4. Umschaltbares Motorlager nach einem der Ansprüche 1 bis 3, **dadurch gekennzeichnet, dass** die Druckdose (14) aus einem steifen Boden (17) und einer daran aufgesetzten konusartigen Hülle (18) aus einem elastomeren Material mit einem Schließelement (16, 26) an ihrer Oberseite besteht.

5. Umschaltbares Motorlager nach Anspruch 4, **dadurch gekennzeichnet, dass** der Boden (17) aus einem Kunststoff hergestellt ist.

6. Umschaltbares Motorlager nach einem der Ansprüche 4 oder 5, **dadurch gekennzeichnet, dass** die Hülle (18) und das Schließelement (16, 26) ein einheitliches Teil sind.

7. Umschaltbares Motorlager nach einem der Ansprüche 4 bis 6, **dadurch gekennzeichnet, dass** der Boden (17) und die Hülle (18) wasserdicht miteinander verbunden sind.

8. Umschaltbares Motorlager nach einem der Ansprüche 4 bis 7, **dadurch gekennzeichnet, dass** die Schließfeder (15) eine innerhalb der Druckdose (14) angeordnete Schraubenfeder ist.

9. Umschaltbares Motorlager nach einem der Ansprüche 4 bis 8, **dadurch gekennzeichnet, dass** am Boden (17) und am Schließelement (16, 26) Aufnahmen (20) für die Enden der Schraubenfeder (15) vorhanden sind.

10. Umschaltbares Motorlager nach Anspruch 9, **dadurch gekennzeichnet, dass** das obere Ende der Schraubenfeder (15) mit einem Einsatz (21) aus Kunststoff versehen ist.

11. Umschaltbares Motorlager nach einem der Ansprüche 1 bis 10, **dadurch gekennzeichnet, dass** das Schließelement (16) eine die Durchbrechung (9) überdeckende Abschlussfläche (22) hat.

12. Umschaltbares Motorlager nach einem der Ansprüche 1 bis 10, **dadurch gekennzeichnet, dass** das Schließelement (26) ein in die Durchbrechung (29) ragender Stöpsel (27) ist.

13. Umschaltbares Motorlager nach Anspruch 12, **dadurch gekennzeichnet, dass** die Durchbrechung (29) und der Stöpsel (27) kegelstumpfartig ausgebildet sind.

## Claims

1. A device switchable engine mount (1) of a carrying mount (2) and a support (3) which are connected to each other by an elastomeric spring body (4) that has a working room (5) and a compensating room (7) which are separated by a separation wall (6), filled with a fluid and hydraulically connected to each other via a damping channel (8), wherein the separation wall (6) comprises a breach (9, 29) closable by a switch (11), and wherein the switch (11) is a switch (11) inserted into the compensating room (7) and controlled by negative pressure, **characterized in that** the switch (11) controlled by negative pressure consists of a pressure box (14), a closing spring (15) and a closing member (16).

2. The switchable engine mount according to claim 1, **characterized in that** the switch (11) controlled by negative pressure is fixed to the support (3) and/or to the separation wall (6).

3. The switchable engine mount according to claim 1 or 2, **characterized in that** the switch (11) has a pressure box whose interior is connected to a pressure generator.

4. The switchable engine mount according to any of claims 1 to 3, **characterized in that** the pressure box (14) consists of a rigid bottom (17) and a cone-like shell (18) placed on it and made of an elastomer material with a closing member (16, 26) at its upper side.

5. The switchable engine mount according to claim 4, **characterized in that** the bottom (17) is made of plastic material.

6. The switchable engine mount according to any of claims 4 or 5, **characterized in that** the shell (18) and the closing member (16, 26) are a unitary part.

7. The switchable engine mount according to any of claims 4 to 6, **characterized in that** the bottom (17) and the shell (18) are waterproofly connected to each other.

8. The switchable engine mount according to any of claims 4 to 7, **characterized in that** the closing spring (15) is a coil spring disposed inside the pressure box (14).

9. The switchable engine mount according to any of claims 4 to 8, **characterized in that** receptions (20) for the ends of the coil spring (15) are available at the bottom (17) and at the closing member (16, 26).

10. The switchable engine mount according to claim 9, **characterized in that** the upper end of the coil spring (15) are provided with an insert of plastic material.

11. The switchable engine mount according to any of claims 1 to 10, **characterized in that** the closing member (16) has an end face (22) covering the breach (9).

12. The switchable engine mount according to any of claims 1 to 10, **characterized in that** the closing member (26) is a plug (27) projecting into the breach (29).

13. The switchable engine mount according to claim 12, **characterized in that** the breach (29) and the plug (27) are formed as a truncated cone.

## Revendications

1. Support de moteur commutable (1) constitué d'un support porteur (2) et d'un support d'appui (3), qui sont reliés l'un à l'autre par un corps élastique en élastomère (4) qui possède une chambre de travail (5) et une chambre de compensation, lesquelles sont séparées par une paroi de séparation (6), sont remplies avec un liquide, et sont reliées l'une à l'autre sur le plan hydraulique via un canal d'amortissement (8), dans lequel la paroi de séparation (6) comporte une traversée (9, 29) susceptible d'être obturée au moyen d'un commutateur (11), et dans lequel le commutateur (11) est un commutateur commandé par dépression (11) introduit dans la chambre de compensation (7), **caractérisé en ce que** le commutateur commandé par dépression (11) est constitué d'une capsule à pression (14), d'un ressort de fermeture (15) et d'un élément de fermeture (16).

2. Support de moteur commutable selon la revendication 1, **caractérisé en ce que** le commutateur (11) commuté par dépression est fixé sur le support d'appui (3) et/ou sur la paroi de séparation (6).

3. Support de moteur commutable selon la revendication 1 ou 2, **caractérisé en ce que** le commutateur (11) est une capsule à pression, dont la chambre intérieure est branchée à un générateur de pression.

4. Support de moteur commutable selon l'une des revendications 1 à 3, **caractérisé en ce que** la capsule à pression (14) est constitué par un fond rigide (17) et par une enveloppe de forme conique (18) posée sur celui-ci, en un matériau élastomère, avec un élément de fermeture (16, 26) sur sa face supérieure.

5. Support de moteur commutable selon la revendication 4, **caractérisé en ce que** le fond (17) est fabriqué en matière plastique.

6. Support de moteur commutable selon l'une des revendications 4 ou 5, **caractérisé en ce que** l'enveloppe (18) et l'élément de fermeture (16, 26) sont une pièce unitaire.

7. Support de moteur commutable selon l'une des revendications 4 à 6, **caractérisé en ce que** le fond (17) et l'enveloppe (18) sont unis l'un à l'autre de façon étanche à l'eau.

8. Support de moteur commutable selon l'une des revendications 4 à 7, **caractérisé en ce que** le ressort de fermeture (15) est un ressort hélicoïdal agencé à l'intérieur de la capsule à pression (14).

9. Support de moteur commutable selon l'une des revendications 4 à 8, **caractérisé en ce qu'**il est prévu des récepteurs (20) sur le fond (17) et sur l'élément de fermeture (16, 26) pour les extrémités du ressort hélicoïdal (15).

10. Support de moteur commutable selon la revendication 9, **caractérisé en ce que** l'extrémité supérieure du ressort hélicoïdal (15) est pourvue d'un insert (21) en matière plastique.

11. Support de moteur commutable selon l'une des revendications 1 à 10, **caractérisé en ce que** l'élément de fermeture (16) présente une surface de terminaison (22) qui recouvre la traversée (9).

12. Support de moteur commutable selon l'une des revendications 1 à 10, **caractérisé en ce que** l'élément de fermeture (26) est un bouchon (27) qui fait saillie jusque dans la traversée (29).

13. Support de moteur commutable selon la revendication 12, **caractérisé en ce que** la traversée (29) et le bouchon (27) sont réalisés avec une forme tronconique.
